# EUROPÄISCHE PATENTSCHRIFT

(11) **EP 4 115 250 B1**
(45) Veröffentlichungstag und Bekanntmachung des Hinweises auf die Patenterteilung: **20.11.2024**
(21) Anmeldenummer: 21707161.2
(22) Anmeldetag: 17.02.2021
(51) Int. Cl.: G05B 19/416

(54) **VERFAHREN ZUM ABBREMSEN EINES OBJEKTS UND MASCHINE**
METHOD FOR DECELERATING AN OBJECT AND MACHINE
PROCÉDÉ DE DÉCÉLÉRATION D'UN OBJET ET MACHINE

(30) Priorität: 03.03.2020 DE 102020001358
(43) Veröffentlichungstag der Anmeldung: 11.01.2023
(73) Patentinhaber: SEW-EURODRIVE GmbH & Co. KG, 76646 Bruchsal (DE)
(72) Erfinder: STIEBOLDT, Sven, 76351 Linkenheim-Hochstetten (DE); MARTEN, Dominik, 76297 Stutensee (DE); MÜLLER, Markus, 76863 Herxheimweyher (DE)
(86) Internationale Anmeldenummer: PCT/EP2021/025056
(87) Internationale Veröffentlichungsnummer: WO 2021/175487

(56) Entgegenhaltungen:
- CN-A- 109 991 934
- DE-A1- 102008 029 657
- US-A1- 2007 222 288
- HANS FLODIN: "Configuration Space Motion Planning for a Robotic Manipulator", 1 January 2014 (2014-01-01), pages 1 - 86, XP055803602, Retrieved from the Internet <URL:https://manualzz.com/doc/17539171/configuration-space-motion-planning-for-a-robotic-manipul...> [retrieved on 20210511]

## Beschreibung

Die Erfindung betrifft ein Verfahren zum Abbremsen eines Objekts und eine Maschine.

Es ist allgemein bekannt, dass beim Abbremsen eines Objekts ein nichtverschwindender Ruck auftritt, weil die Beschleunigung zumindest zu Beginn und am Ende des Abbremsvorgangs nicht konstant ist.

Aus der DE 10 2017 102 749 A1 ist als nächstliegender Stand der Technik eine automatische Trajektorienerzeugung zur Ansteuerung eines Antriebssystems bekannt.

Aus der DE 10 2015 103 451 A1 ist ein Verfahren zum zeitdiskreten Kontrollieren antreibbarer Achsen bekannt.

Aus der DE 10 2014 103 370 A1 ist ein Verfahren zur zeitdiskreten Steuerung eines Manipulators bekannt.

Aus der DE 10 2013 012 448 A1 ist ein Verfahren zum Bremsen einer Roboterachsansteuerung bekannt.

Aus der DE 10 2011 122 434 B4 ist ein Verfahren zur Steuerung einer Bewegung von mechanischen Vorrichtungen unter Verwendung nacheinander interpolierter Verfahrsätze bekannt.

Aus der DE 10 2008 008 341 B4 ist ein Verfahren zum Herstellen eines Steuerprogramms bekannt.

**Aus der** DE 10 2008 029657 A1 **sind verschiedene Beschleunigungsprofile für das Bewegen eines Objekts bekannt.**

**Aus der** US 2007 / 222288 A1 **ist ein Abbremsen bekannt.**

Aufgabe der Erfindung ist daher, ein ruckbegrenztes Abbremsen weiterzubilden.

Die Aufgabe wird gelöst durch die in dem Verfahren nach Anspruch 1 angegebenen Merkmale und durch die in der Maschine nach Anspruch **4** angegebenen Merkmale.

Wichtige Merkmale bei dem Verfahren sind, dass ein Verfahren zum Abbremsen eines Objekts ausgeführt wird,
insbesondere wobei das Objekt in einer Aufnahmeeinheit aufgenommen ist, welche von einer Maschine, insbesondere einem mehrachsigen oder mehrgliedrigen Roboter entlang einer Bahnkurve geführt wird,
wobei in einem ersten Zeitabschnitt das anfangs mit einer Geschwindigkeit bewegte Objekt einem negativen Ruck ausgesetzt wird, dessen Betrag unterhalb eines Schwellwertes ist,
in einem zweiten, sich an den ersten Zeitabschnitt anschließenden Zeitabschnitt das Objekt keinem Ruck, also konstanter Beschleunigung, ausgesetzt wird, wobei die Geschwindigkeit des Objekts einen Nulldurchgang aufweist und/oder wobei die Geschwindigkeit des Objekts verschwindet und dann seine Richtung umkehrt,
in einem dritten, sich an den zweiten Zeitabschnitt anschließenden Zeitabschnitt das Objekt einem positiven Ruck ausgesetzt wird, dessen Betrag unterhalb eines Schwellwertes ist,
in einem vierten, sich an den dritten Zeitabschnitt anschließenden Zeitabschnitt das Objekt einem negativen Ruck ausgesetzt wird, dessen Betrag unterhalb eines Schwellwertes ist,
wobei der zeitliche Verlauf des Rucks im dritten und vierten Zeitabschnitt derart gewählt wird, dass die Geschwindigkeit am Ende des vierten Zeitabschnitts Null erreicht.

Der Vorteil ist dabei, dass bei einem ruckbegrenzten Abbremsen eines Objekts ein sehr kurzer Bremsweg erreichbar ist. Dabei ist ein Reversieren innerhalb des Bremswegs vorgesehen.

Bei einer vorteilhaften Ausgestaltung ist im ersten Zeitabschnitt die Beschleunigung eine streng monoton fallende Funktion der Zeit, insbesondere mit der Zeit linear verringert wird, und kleiner Null ist. Der Vorteil ist dabei, dass der Betrag der Beschleunigung bis auf einen maximalen Wert ansteigt, insbesondere beispielsweise einen von den Antrieben, also von der Maschine, maximal bereitstellbaren Wert.

Bei einer vorteilhaften Ausgestaltung ist im zweiten Zeitabschnitt die Beschleunigung konstant. Der Vorteil ist dabei, dass ein möglichst schneller Abbau des Impulses des Objekts erreichbar ist.

**Erfindungsgemäß** ist im dritten Zeitabschnitt die Beschleunigung eine streng monoton steigende Funktion der Zeit, insbesondere mit der Zeit linear anwächst, und/oder im dritten Zeitabschnitt die Beschleunigung einen einzigen Nulldurchgang aufweist. Von Vorteil ist dabei, dass ein Reversieren erlaubt wird und somit eine Bremswegverkürzung trotz Ruckbegrenzung erreichbar ist.

**Erfindungsgemäß** fungiert der Schwellwert als Grenzwert für den Betrag des Rucks, insbesondere also ist der Ruckbetrag stets kleiner als der Schwellwert. Von Vorteil ist dabei, dass eine Ruckbegrenzung vorgesehen ist und trotzdem ein kurzer Bremsweg realisierbar ist.

**Erfindungsgemäß** ist im vierten Zeitabschnitt die Beschleunigung eine streng monoton fallende Funktion der Zeit, insbesondere wird also mit der Zeit linear verringert, und ist größer Null. Von Vorteil ist dabei, dass das Objekt zuletzt an einer Position ruht, insbesondere ohne Impuls aufzuweisen.

Wichtige Merkmale bei der Maschine, insbesondere Roboter, sind, dass die Maschine zur Durchführung eines vorgenannten Verfahrens vorgesehen ist. Von Vorteil ist dabei, dass die Maschine mehrere Achsen aufweist, welche das Objekt auf der Bahnkurve führen. Die Bahnkurve ist vorzugsweise eindimensional und/oder als Gerade, also nichtgekrümmte Kurve, ausgeführt. Alternativ ist die Erfindung aber auch auf gekrümmte räumliche Kurven anwendbar.

Bei einer vorteilhaften Ausgestaltung ist das Objekt von einer Aufnahmeeinheit, insbesondere Tool Center Point, der Maschine aufgenommen, wobei die Aufnahmeeinheit von den Antrieben der Maschine entlang eines Sollpositionsverlaufs, insbesondere also entlang einer Bahnkurve, mit einem Sollgeschwindigkeitsverlauf bewegt wird. Von Vorteil ist dabei, dass das Objekt ruckbegrenzt bewegbar ist.

Bei einer vorteilhaften Ausgestaltung regeln die Antriebe ihre jeweiligen Istpositionen auf jeweilige Sollpositionen hin. Von Vorteil ist dabei, dass die von der Steuerung der Maschine vorausberechnete Bahnkurve vom Objekt ausgeführt wird, also das Objekt ruckbegrenzt abgebremst wird bei besonders kurzem Bremsweg. Weitere Vorteile ergeben sich aus den Unteransprüchen.

Die Erfindung wird nun anhand von Abbildungen näher erläutert:
In den Figuren 1 bis 4 ist ein Abbremsen eines Objekts bis zum Stillstand dargestellt.
In der Figur 1 ist hierzu der zeitliche Ruckverlauf dargestellt.
In der Figur 2 ist der zugehörige Beschleunigungsverlauf dargestellt.
In der Figur 3 ist der zugehörige Geschwindigkeitsverlauf dargestellt.
In der Figur 4 ist der zugehörige Positionsverlauf dargestellt.
In den Figuren 5 bis 8 ist ein Abbremsen eines Objekts mit reversierender Zielerreichung dargestellt.

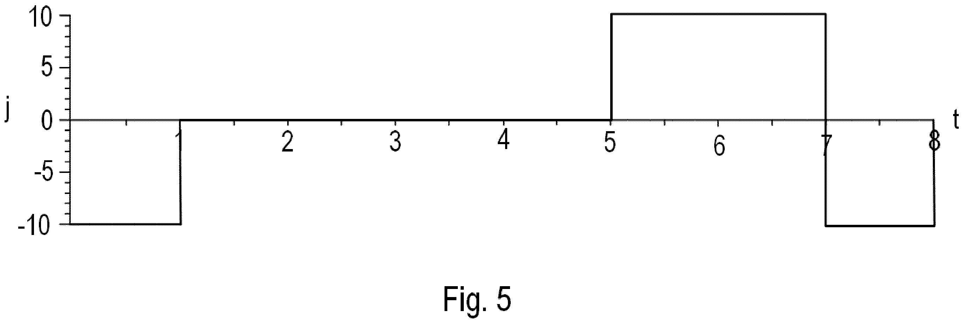

In der Figur 5 ist hierzu der zeitliche Ruckverlauf dargestellt.

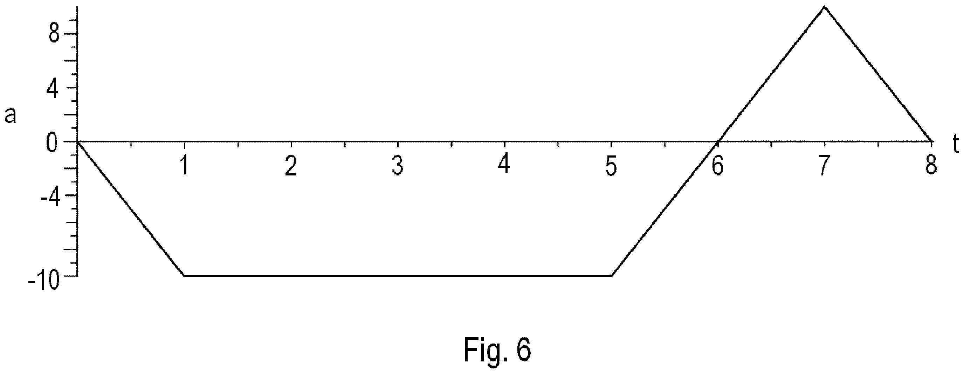

In der Figur 6 ist der zur Figur 5 zugehörige Beschleunigungsverlauf dargestellt.

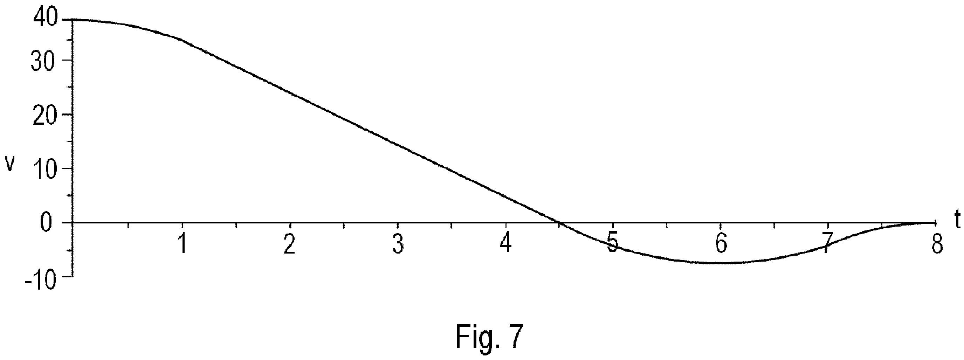

In der Figur 7 ist der zur Figur 6 zugehörige Geschwindigkeitsverlauf dargestellt.

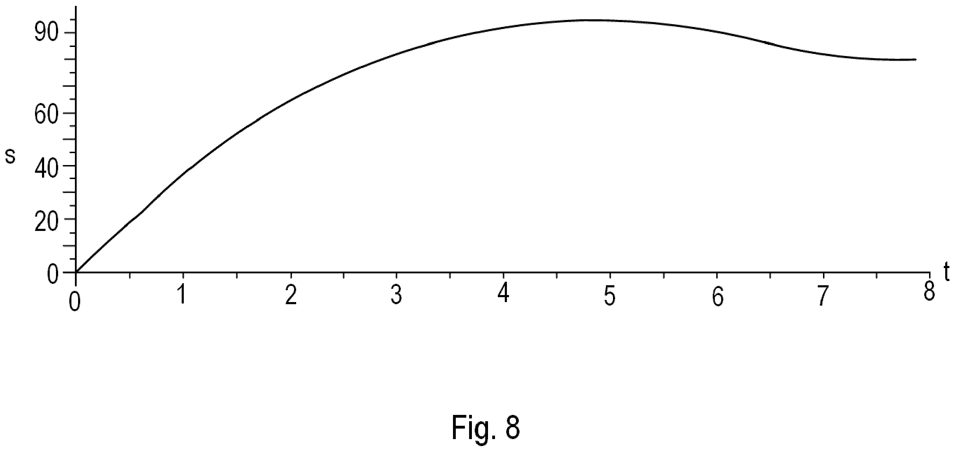

In der Figur 8 ist der zur Figur 7 zugehörige Positionsverlauf dargestellt.

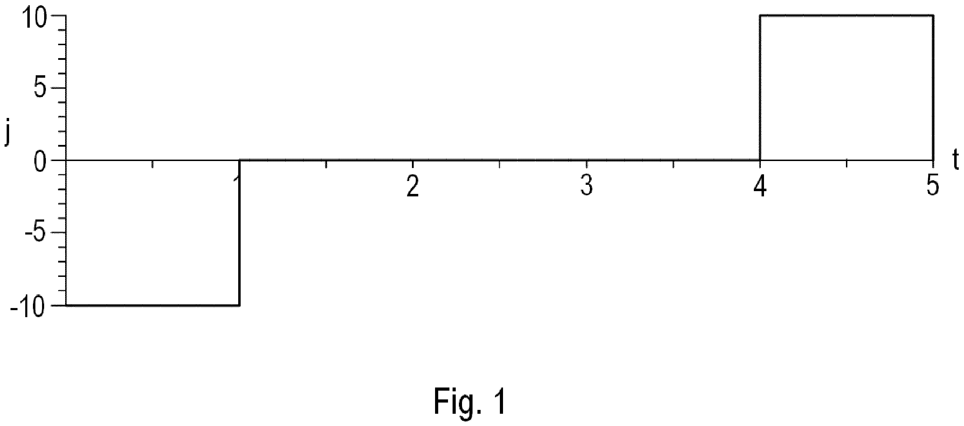

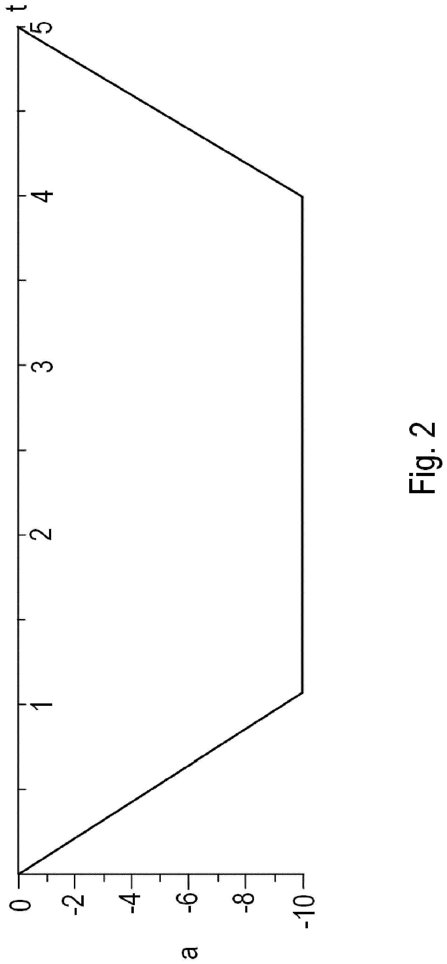

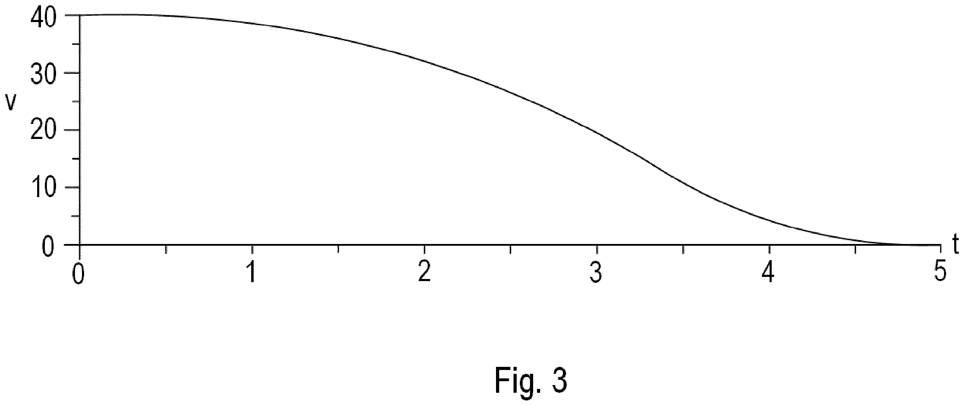

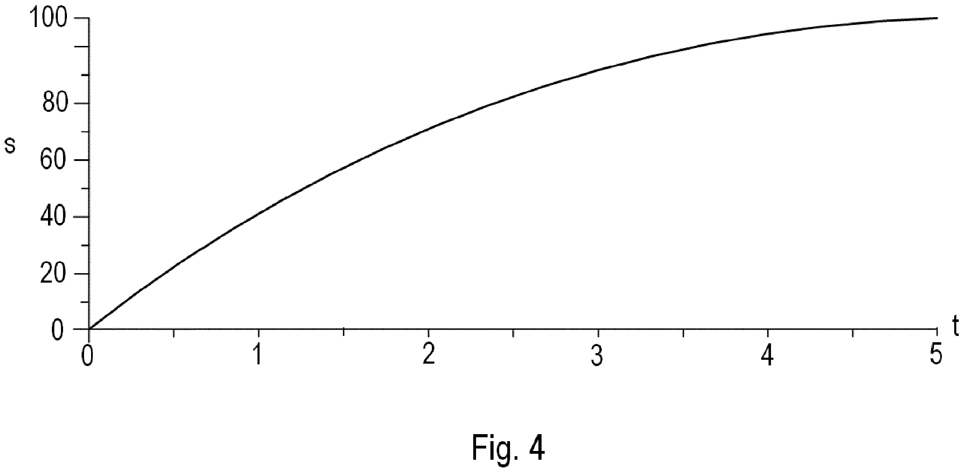

Wie in den Figuren 1 bis 4 dargestellt, wird das anfangs bewegtes, abzubremsende Objekt zunächst einem negativen Ruck ausgesetzt, was zu einer zunehmenden Bremsbeschleunigung führt und auch die Geschwindigkeit reduziert. Somit nimmt die Zunahme der Position immer langsamer zu.

Nach dem negativen Ruck, dessen Betrag unterhalb eines Schwellwertes liegt, so dass die Bewegung ruckbegrenzt ausgeführt bleibt, wird ein verschwindender Ruck für das Objekt vorgesehen, so dass die Beschleunigung konstant ist und die Geschwindigkeit mit der Zeit linear abfällt. In diesem Zeitabschnitt verschwindenden Rucks wächst die Position nur parabelförmig mit der Zeit an.

In einem letzten Abschnitt wird ein positiver Ruck vorgesehen, dessen Betrag ebenfalls unter dem Schwellwert bleibt. Somit verringert sich die Beschleunigung auf Null und ebenso die Geschwindigkeit auf Null. Die Position erreicht in diesem letzten Abschnitt die vorgesehene Ruheposition.

Im Gegensatz zu dem in den Figuren 1 bis 4 dargestellten Abbremsen wird ein erfindungsgemäßes ruckbegrenztes Abbremsen des Objekts t in den Figuren 5 bis 8 dargestellt.

Hierbei wird wiederum im ersten Zeitabschnitt das anfangs bewegte, abzubremsende Objekt einem negativen Ruck ausgesetzt, was zu einer zunehmenden Bremsbeschleunigung führt und auch die Geschwindigkeit reduziert. Somit nimmt die Zunahme der Position immer langsamer zu.

Nach dem negativen Ruck, dessen Betrag unterhalb des Schwellwertes liegt, so dass die Bewegung ruckbegrenzt ausgeführt bleibt, wird ein verschwindender Ruck für das Objekt vorgesehen, so dass die Beschleunigung konstant ist und die Geschwindigkeit mit der Zeit linear abfällt. In diesem Zeitabschnitt verschwindenden Rucks wächst die Position nur noch parabelförmig mit der Zeit an, also weniger stark als ein mit der Zeit lineares Anwachsen die Position anwachsen lassen würde.

Sobald die Geschwindigkeit abgebaut ist, kommt das Objekt zwar zur Ruhe; allerdings muss nun noch die Beschleunigung abgebaut werden. Dies erfolgt in einem dritten Zeitabschnitt, in welchem ein positiver ruck auftritt, welcher gefolgt wird von einem vierten Zeitabschnitt mit negativem Ruck.

Im dritten und vierten Abschnitt bleibt der Betrag des Rucks jeweils ebenfalls unter dem Schwellwert. Im dritten Zeitabschnitt verringert sich die Bremsbeschleunigung auf Null und nimmt dann positive Werte an. Dabei wächst die Beschleunigung mit der Zeit an und wird dann aber im vierten Zeitabschnitt auf Null abgebaut. Der zeitliche Verlauf der Beschleunigung wird für den dritten und vierten Zeitabschnitt derart vorgegeben, dass am Ende des vierten Zeitabschnitts das Objekt zur Ruhe kommt und dabei die Geschwindigkeit und die Beschleunigung jeweils verschwinden, also auf Null aufgebaut sind.

Das erfindungsgemäße ruckbegrenzte Verfahren nach den Figuren 5 bis 8 hat gegenüber dem ebenfalls ruckbegrenzten Verfahren nach den Figuren 1 bis 4 den Vorteil, dass der Bremsweg kürzer ist, wobei allerdings ein Reversieren der Bewegung des Objekts auftritt.

Das Objekt ist dabei von einer Aufnahmeeinheit aufgenommen, die von einem insbesondere mehrgliedrigen Roboterarm bewegt wird, wobei jedes Glied des Roboterarms einen elektrischen Antrieb aufweist und somit als Maschinenachse fungiert. Eine die Antriebe steuernde Steuerung errechnet unter Berücksichtigung der Kinematik und Geometrie des Roboters den zugehörigen Verlauf der von den jeweiligen Antrieben anzufahrenden jeweiligen Sollpositionen, auf die die Antriebe ihre jeweilige Achsenposition hinregeln.

### Bezugszeichenliste

j Ruck
a Beschleunigung
v Geschwindigkeit
s Position
t Zeit

## Patentansprüche

1. Verfahren zum Abbremsen eines Objekts,
wobei
**das Objekt in einer Aufnahmeeinheit aufgenommen ist, welche von einer Maschine, insbesondere einem mehrachsigen oder mehrgliedrigen Roboter entlang einer gekrümmten räumlichen Kurven Bahnkurve geführt wird,**
**wobei unter Ruckbegrenzung ein Reversieren innerhalb des Bremswegs ausgeführt wird, wobei**
in einem ersten Zeitabschnitt das anfangs mit einer Geschwindigkeit bewegte Objekt einem negativen Ruck ausgesetzt wird, dessen Betrag unterhalb eines Schwellwertes ist,
in einem zweiten, sich an den ersten Zeitabschnitt anschließenden Zeitabschnitt das Objekt keinem Ruck, also konstanter Beschleunigung, ausgesetzt wird, wobei die Geschwindigkeit des Objekts einen Nulldurchgang aufweist und/oder wobei die Geschwindigkeit des Objekts verschwindet und dann seine Richtung umkehrt,
in einem dritten, sich an den zweiten Zeitabschnitt anschließenden Zeitabschnitt das Objekt einem positiven Ruck ausgesetzt wird, dessen Betrag unterhalb des Schwellwertes ist,
in einem vierten, **sich** an den dritten Zeitabschnitt **anschließenden** Zeitabschnitt das Objekt einem negativen Ruck ausgesetzt wird, dessen Betrag unterhalb des Schwellwertes ist,
wobei der zeitliche Verlauf des Rucks im dritten und vierten Zeitabschnitt derart gewählt wird, dass die Geschwindigkeit am Ende des vierten Zeitabschnitts Null erreicht,
**wobei im dritten Zeitabschnitt die Beschleunigung eine streng monoton steigende Funktion der Zeit ist, also mit der Zeit linear anwächst und im dritten Zeitabschnitt die Beschleunigung einen einzigen Nulldurchgang aufweist,**
**wobei der Schwellwert als Grenzwert für den Betrag des Rucks fungiert,**
**also der Ruckbetrag stets kleiner ist als der Schwellwert,**
**wobei im vierten Zeitabschnitt die Beschleunigung eine streng monoton fallende Funktion der Zeit ist, also mit der Zeit linear verringert wird und größer Null ist, bis am Ende des vierten Zeitabschnitts die Beschleunigung auf Null abgebaut ist.**

2. Verfahren nach Anspruch 1,
**dadurch gekennzeichnet, dass**
im ersten Zeitabschnitt die Beschleunigung eine streng monoton fallende Funktion der Zeit ist, insbesondere mit der Zeit linear verringert wird, und kleiner Null ist.

3. Verfahren nach einem der vorangegangenen Ansprüche,
**dadurch gekennzeichnet, dass**
im zweiten Zeitabschnitt die Beschleunigung konstant ist.

4. Maschine, insbesondere Roboter, zur Durchführung eines Verfahrens nach einem der vorangegangenen Ansprüche,
**dadurch gekennzeichnet, dass**
das Objekt von einer Aufnahmeeinheit, insbesondere Tool Center Point, der Maschine aufgenommen ist,
wobei die Aufnahmeeinheit von den elektrischen Antrieben der Maschine entlang eines Sollpositionsverlaufs, **nämlich entlang einer räumlich gekrümmten Bahnkurve,** mit einem Sollgeschwindigkeitsverlauf bewegt wird.

5. **Maschine nach Anspruch 4,**
**dadurch gekennzeichnet, dass**
die Antriebe ihre jeweiligen Istpositionen auf jeweilige Sollpositionen hinregeln.

## Claims

1. A method for braking an object,
wherein
the object is received in a receiving unit which is guided along a curved spatial curves trajectory by a machine, in particular a multi-axis or multi-link robot,
wherein, with jerk limitation, reversing within the braking distance is carried out, wherein
in a first time period the object which is initially moved at a speed is subjected to a negative jerk, the amount of which lies below a threshold value,
in a second time period following on from the first time period the object is not subjected to any jerk, i.e. is subjected to a constant acceleration, wherein the speed of the object has a zero crossing and/or wherein the speed of the object vanishes and then reverses its direction,
in a third time period following on from the second time period the object is subjected to a positive jerk, the amount of which lies below the threshold value,
in a fourth time period following on from the third time period the object is subjected to a negative jerk, the amount of which lies below the threshold value,
wherein the time characteristic of the jerk in the third and fourth time periods is selected such that the speed reaches zero at the end of the fourth time period,
wherein in the third time period the acceleration is a strictly monotonically rising function of the time, i.e. grows linearly with time and in the third time period the acceleration has a single zero crossing,
wherein the threshold value functions as a limit value for the amount of the jerk, i.e. the amount of jerk is always smaller than the threshold value,
wherein in the fourth time period the acceleration is a strictly monotonically falling function of the time, i.e. is reduced linearly with time, and is greater than zero, until at the end of the fourth time period the acceleration is lowered to zero.

2. A method according to claim 1,
**characterised in that**
in the first time period the acceleration is a strictly monotonically falling function of the time, in particular is reduced linearly with time, and is less than zero.

3. A method according to one of the preceding claims,
**characterised in that**
in the second time period the acceleration is constant.

4. A machine, in particular robot, for carrying out a method according to one of the preceding claims,
**characterised in that**
the object is received by a receiving unit, in particular tool centre point, of the machine,
the receiving unit being moved by the electric drives of the machine along a setpoint position profile, namely along a spatially curved trajectory, with a setpoint speed profile.

5. A machine according to claim 4,
**characterised in that**
the drives regulate their respective actual positions towards respective setpoint positions.

## Revendications

1. Procédé de freinage d'un objet,
dans lequel l'objet est accueilli dans une unité d'accueil qui est guidée par une machine, en particulier un robot à plusieurs axes ou à plusieurs éléments, le long d'une courbe de trajectoire incurvée dans l'espace,
dans lequel une inversion à l'intérieur du parcours de freinage est mise en oeuvre en limitant les à-coups, dans lequel
dans un premier intervalle de temps, l'objet initialement déplacé à une certaine vitesse est soumis à un à-coup négatif dont la quantité est inférieure à une valeur de seuil,
dans un second intervalle de temps succédant au premier intervalle de temps, l'objet n'est soumis à aucun à-coup, et donc est soumis à une accélération constante, dans lequel la vitesse de l'objet présente un passage par zéro et/ou dans lequel la vitesse de l'objet disparait puis inverse sa direction,
dans un troisième intervalle de temps succédant au deuxième intervalle de temps, l'objet est soumis à un à-coup positif dont la quantité est inférieure à la valeur de seuil, dans un quatrième intervalle de temps succédant au troisième intervalle de temps, l'objet est soumis à un à-coup négatif dont la quantité est inférieure à la valeur de seuil, dans lequel la courbe temporelle de l'à-coup dans les troisième et quatrième intervalles de temps est choisie de telle manière que
la vitesse atteint zéro à la fin du quatrième intervalle de temps,
dans lequel, dans le troisième intervalle de temps, l'accélération est une fonction du temps qui augmente de manière strictement monotone, c'est-à-dire qu'elle augmente de manière linéaire avec le temps et, dans le troisième intervalle de temps, l'accélération présente un seul passage par zéro,
dans lequel la valeur de seuil sert de valeur limite pour la quantité de l'à-coup,
et donc la quantité d'à-coup est toujours inférieure à la valeur de seuil,
dans lequel, dans le quatrième intervalle de temps, l'accélération est une fonction du temps diminuant de manière strictement monotone, c'est-à-dire qu'elle diminue de manière linéaire avec le temps et est supérieure à zéro jusqu'à ce que l'accélération soit réduite à zéro à la fin du quatrième intervalle de temps.

2. Procédé selon la revendication 1,
**caractérisé en ce que**
dans le premier intervalle de temps, l'accélération est une fonction du temps qui diminue de manière strictement monotone, en particulier qui diminue de manière linéaire avec le temps, et qui est inférieure à zéro.

3. Procédé selon l'une quelconque des revendications précédentes,
**caractérisé en ce que**
dans le deuxième intervalle de temps, l'accélération est constante.

4. Machine, en particulier robot, permettant de mettre en oeuvre un procédé selon l'une quelconque des revendications précédentes,
**caractérisée en ce que**
l'objet est accueilli par une unité d'accueil, en particulier au Tool Center Point (point central d'outil), de la machine,
dans laquelle l'unité d'accueil est déplacée par les entraînements électriques de la machine le long d'une courbe de position de consigne, à savoir le long d'une courbe de trajectoire incurvée dans l'espace, avec une courbe de vitesse de consigne.

5. Machine selon la revendication 4,
**caractérisée en ce que**
les entraînements règlent leurs positions réelles respectives sur les positions de consigne respectives.
